# EUROPÄISCHE PATENTSCHRIFT

(11) **EP 2 966 315 B1**
(45) Veröffentlichungstag und Bekanntmachung des Hinweises auf die Patenterteilung: **20.11.2019**
(21) Anmeldenummer: 15172589.2
(22) Anmeldetag: 17.06.2015
(51) Int. Cl.: F16F 15/133

(54) **ZWEIMASSENSCHWUNGRAD**
DUAL MASS FLYWHEEL
VOLANT D'INERTIE À DEUX MASSES

(30) Priorität: 17.06.2014 DE 102014008887
(43) Veröffentlichungstag der Anmeldung: 13.01.2016
(73) Patentinhaber: Federntechnik Knörzer GmbH, 72793 Pfullingen (DE)
(72) Erfinder: Behning, Kai, 96172 Mühlhausen (DE); Knörzer, Thomas, 72793 Pfullingen (DE)
(74) Vertreter: Sebastian, Jens

(56) Entgegenhaltungen:
- DE-A1- 19 717 432
- DE-C1- 19 734 726
- US-A1- 2012 102 936

## Beschreibung

Die Erfindung bezieht sich auf ein Zweimassenschwungrad.

Ein Zweimassenschwungrad wird üblicherweise im Antriebsstrang eines Kraftfahrzeugs dem Antriebsmotor und der Kupplung zwischengeschaltet und dient zur Dämpfung der vom Motor erzeugten Drehmomentschwankungen. Indem mittels des Zweimassenschwungrades die vom Motor erzeugten Drehmomentstöße aufgefangen werden, werden die Kupplung und das nachgeschaltete Getriebe entlastet. Hierdurch wird das durch die Torsionsstöße erzeugte Fahrgeräusch (Getrieberasseln) reduziert. Des Weiteren werden der Verschleiß der Kupplung und des Getriebes reduziert.

Ein Zweimassenschwungrad ist üblicherweise aus zwei scheibenförmigen Schwungmassen (Massenscheiben) gebildet, die relativ zueinander verdrehbar sind. Eine - auch als primäre Schwungmasse bezeichnete - Massenscheibe ist hierbei starr mit der Kurbelwelle des Antriebsmotors gekoppelt. Auf die andere - üblicherweise auch als sekundäre Schwungmasse bezeichnete - Massenscheibe ist unmittelbar die Kupplung montiert.

Um Drehmomentstöße im Antriebsstrang des Kraftfahrzeugs abzufedern, sind den beiden Massenscheiben eine Anzahl von Federelementen zwischengeordnet, durch die eine Relativverdrehung der Massenscheiben angefedert ist. Die zwischengeordneten Federelemente sind somit derart mit den beiden Massenscheiben gekoppelt, dass sie einer Verdrehung der Massenscheiben relativ zueinander eine rückstellende Kraft entgegensetzen.

Bei herkömmlichen Zweimassenschwungrädern werden üblicherweise sogenannte Wurm- oder Bogenfedern als Federelemente eingesetzt, d.h. langgestreckte Schraubendruckfedern mit kreisbogenförmig gekrümmter Achse, die zwischen den Massenscheiben in einem - bezüglich der gemeinsamen Drehachse der Massenscheiben - in Umfangsrichtung verlaufenden Federkanal einliegen.

Nachteiligerweise sind herkömmliche Zweimassenschwungräder vergleichsweise schwer und komplex aufgebaut. Dies liegt insbesondere daran, dass die Bogenfedern zur Reibungsverminderung in ein Schmiermittel (üblicherweise Schmiefett) eingebettet werden müssen, um eine hinreichende Performanz des Zweimassenschwungrades sicherzustellen und einem hohen Verschleiß der Federung entgegenzuwirken. Die Federkanäle der herkömmlichen Zweimassenschwungräder müssen daher hinreichend dicht ausgestaltet sein, um das Austreten des Schmiermittels nach Möglichkeit zu verhindern. Überdies sind herkömmliche Zweimassenschwungräder nur eingeschränkt belastbar sowie empfindlich gegen Verschmutzungen, zum Beispiel durch Kupplungsabrieb. Diese Faktoren bewirken eine vergleichsweise geringe Robustheit und eine vergleichsweise geringe Lebensdauer herkömmlicher Zweimassenschwungräder, insbesondere unter starker Belastung.

Die Patentanmeldung US 2012/0 102 936 A1 offenbart ein Turbinenschaufeln aufweisendes Turbinenrad mit einem Drehschwingungsdämpfer. Der Drehschwingungsdämpfer weist koaxial ineinander angeordnete und gegeneinander verdrehbare Kreisringsscheiben mit Fenstern auf, in denen Schraubendruckfedern tangential angeordnet sind, die die Kreisringsscheiben federnd in einer Umfangsrichtung und damit federnd gegen Verdrehung gegeneinander abstützen. Das Turbinenrad ist drehbar auf einer Narbe des Drehschwingungsdämpfers angeordnet, auf der auch ein gewendelter Federkörper einer Schenkelfeder angeordnet ist, deren einer Federschenkel am Turbinenrad und deren anderer Federschenkel am Drehschwingungsdämpfer festgelegt ist, so dass das Turbinenrad federnd gegen Verdrehung am Drehschwingungsdämpfer abgestützt ist.

Die Offenlegungsschrift DE 197 17 432 A1 offenbart ein Zweimassenschwungrad mit zwei gegeneinander verdrehbaren Massenscheiben, die mit U-förmigen Bügelfedern federnd gegen Verdrehung gegeneinander abgestützt sind. Die Bügelfedern sind auf einem gedachten Kreis nahe einem Außenumfang des Zweimassenschwungrads angeordnet. Federschenkel der Bügelfedern weisen radial nach außen und es ist jeweils ein Federschenkel an einem Außenumfang einer Massenscheibe festgelegt.

Der Erfindung liegt die Aufgabe zugrunde, ein effektives, gleichzeitig aber einfach aufgebautes und robustes Zweimassenschwungrad anzugeben.

Diese Aufgabe wird erfindungsgemäß gelöst durch die Merkmale des Anspruchs 1. Das erfindungsgemäße Zweimassenschwungrad umfasst eine erste Massenscheibe und eine zweite Massenscheibe, die um eine Drehachse relativ zueinander verdrehbar sind. Die Bezeichnung der Massenscheiben als "erste" bzw. "zweite" Massenscheibe ist hierbei unabhängig von der bestimmungsgemäßen Orientierung der Massenscheiben in dem Antriebsstrang eines Kraftfahrzeugs gewählt. Bei der "ersten" Massenscheibe kann es sich somit entweder um die mit dem Antriebsmotor zu koppelnde primäre Schwungmasse oder um die mit der Kupplung zu koppelnde sekundäre Schwungmasse handeln. Bei der "zweiten" Massenscheibe des erfindungsgemäßen Zweimassenschwungrads handelt es sich um die jeweils andere Schwungmasse.

Weiterhin umfasst das Zweimassenschwungrad eine Anzahl von Federelementen, die zwischen der ersten Massenscheibe und der zweiten Massenscheibe angeordnet sind und durch die die Relativverdrehung der beiden Massenscheiben (also die Verdrehung der beiden Massenscheiben relativ zueinander) angefedert ist. Erfindungsgemäß werden als Federelemente hierbei keine Wurm- oder Bogenfedern eingesetzt. Vielmehr sind bei dem erfindungsgemäßen Zweimassenschwungrad Federelemente in Form von Schenkelfedern vorgesehen. Im Rahmen der Erfindung kann dabei grundsätzlich vorgesehen sein, dass das Zweimassenschwungrad zusätzlich zu den vorstehend beschriebenen Schenkelfedern noch andersartige (von Wurm- oder Bogenfedern verschiedene) Federelemente aufweist. Im Sinne eines möglichst einfachen Aufbaus umfasst das Zweimassenschwungrad aber ausschließlich Schenkelfedern - insbesondere ausschließlich baugleiche Schenkelfedern - als Federelemente.

Der Einsatz von Schenkelfedern als Federelemente ermöglicht vorteilhafterweise eine besonders einfache und robuste Ausführung des Zweimassenschwungrads, die insbesondere zur Aufnahme von hohen Drehmomenten und Torsionskräften besonders gut geeignet ist. Im Gegensatz zu den herkömmlicherweise eingesetzten Bogenfedern zeichnen sich Schenkelfedern auch durch vergleichsweise geringe Reibungsverluste und eine hohe Unempfindlichkeit gegenüber Verschmutzung, zum Beispiel durch Kupplungsabrieb aus. Das erfindungsgemäße Zweimassenschwungrad ist somit besonders für den Einsatz in leistungsoptimierten Kraftfahrzeugen (insbesondere im Tuning- und Motorsportbereich) geeignet, wo bisher aufgrund hoher Belastungen häufig noch Einmassenschwungräder anstelle der herkömmlichen Zweimassenschwungräder eingesetzt werden.

In der für Schenkelfedern typischen Bauweise weist erfindungsgemäß jedes der Federelemente einen gewendelten Schraubenkörper sowie zwei Federschenkel auf. Erfindungsgemäß stehen diese Federschenkel von diesem Schraubenkörper im Wesentlichen tangential ab. "Im Wesentlichen tangential" bedeutet hierbei, dass die Federschenkel aus der Tangentialrichtung auch geringfügig (z.B. um bis zu ca. ±15°) ausgebogen sein können. Als besonders zweckmäßig hat sich hierbei der Einsatz von Schenkelfedern mit rechteckigem Querschnitt des Federdrahts herausgestellt.

In einer zweckmäßigen Ausführung der Erfindung ist jedes der Federelemente derart zwischen den Massenscheiben eingelegt, dass seine Federschenkel im Wesentlichen radial zu der Drehachse ausgerichtet sind. Der Begriff "im Wesentlichen radial" ist hierbei wiederum dahingehend zu verstehen, dass er geringfügige Abweichungen (z.B. wiederum um bis zu ca. +/- 15°) von einer exakt radialen Ausrichtung der Federschenkel einschließt. Vorzugsweise sind die Federelemente hierbei derart zwischen den Massenscheiben eingelegt, dass ihre Federschenkel etwa radial nach außen ragen. Da hierdurch der Hauptanteil der Masse der Federelemente vergleichsweise nahe an der Drehachse angeordnet ist, kann auf diese Weise die auf die Federelemente wirkende Fliehkraftbelastung vergleichsweise gering gehalten werden. In alternativen Ausführungsformen der Erfindung sind die Federelemente mit nach innen gerichteten Federschenkeln montiert. Dies ist vor allem im Sinne einer optimierten Ausnutzung des Bauraums vorteilhaft, da im Außenbereich der Massenscheiben die vergleichsweise voluminösen Federkörper der Federelemente vergleichsweise leicht anordenbar sind.

Zur Kopplung der Massenscheiben mit den Federelementen sind vorzugsweise an jeder der beiden Massenscheiben innenseitig (d.h. an der Seite der jeweiligen Massenscheibe, die der jeweils anderen Massenscheibe zugewandt ist) für jedes Federelement jeweils zwei Anschläge vorgesehen. Diese Anschläge sind hierbei erfindungsgemäß derart angeordnet, dass sie die beiden Federschenkel eines jeden Federelements jeweils in Umfangsrichtung außenseitig (d.h. an der Seite des jeweiligen Federschenkels, die von dem jeweils anderen Federschenkel abgewandt ist) flankieren. Die an der ersten Massenscheibe vorgesehenen Anschläge sind hierbei in zweckmäßiger Ausführung der Erfindung radial innenseitig, also näher an der Drehachse angeordnet als die korrespondierenden Anschläge der zweiten Massenscheibe.

Die Anschläge bewirken, dass die Federschenkel des jeweiligen Federelements bei einer Relativverdrehung der Massenscheiben - unabhängig von der Drehrichtung - stets zusammengedrückt (also aufeinander zubewegt) werden, wodurch das Federelement gespannt wird. Die Anschläge wirken somit als Widerlager für das jeweilige Federelement. Sie begrenzen gleichzeitig auch den Federweg, also den Winkel, um den die Massenscheiben unter Spannung der Federelemente gegeneinander verdreht werden können.

Im Sinne einer stabilen Führung der Federelemente ist an einer der beiden Massenscheiben, insbesondere an der ersten Massenscheibe, für jedes der Federelemente jeweils ein (insbesondere zylindrischer) Haltevorsprung vorgesehen, auf den das jeweilige Federelement mit dem Federkörper aufgesteckt ist. In alternativer Ausführung ist in einer der beiden Massenscheiben, insbesondere wiederum in der ersten Massenscheibe, für jedes der Federelemente jeweils eine Aussparung eingeformt, in die das jeweilige Federelement eingelegt ist.

In einer besonders einfachen, gleichzeitig aber robusten Ausführung des Zweimassenschwungrades ist jedes der Federelemente schmiermittelfrei (also ohne Einbettung in Schmierfett oder Schmieröl) zwischen den Massenscheiben gelagert. Der Verzicht auf Schmiermittel wird hierbei insbesondere durch den Einsatz der vergleichsweise reibungsverlustarmen Schenkelfedern ermöglicht.

Um die auch bei diesem Federtypus in geringerem Umfang vorhandene Reibungsverluste zu minimieren, sind die Flächen der beiden Massenscheiben, an denen diese bestimmungsgemäß mit den Federelementen in Berührung kommen, vorzugsweise zumindest teilweise mit einer Anti-Haft-Oberfläche versehen. Dies betrifft insbesondere die gegebenenfalls vorhandenen Anschläge und die gegebenenfalls vorhandenen Haltevorsprünge der zweiten Massenscheibe. Die Anti-Haft-Oberfläche ist beispielsweise aus Poly-Tetra-Fluorethylen (PTFE) gebildet. Die Anti-Haft-Oberfläche kann dabei im Rahmen der Erfindung durch eine Beschichtung des metallischen Grundkörpers der jeweiligen Massenscheibe gebildet sein. Vorzugsweise sind die Anti-Haft-Oberflächen aber jeweils durch eine Hülse aus PTFE oder anderem Material mit geringem Reibungskoeffizienten gebildet, die auf einen korrespondierenden Vorsprung der jeweiligen Massenscheibe (insbesondere die gegebenenfalls vorhandenen Anschläge und Haltevorsprünge) aufgesteckt ist.

Eine einfache, aber effektive Lagerung der beiden Massenscheiben aneinander wird in einer bevorzugten Ausführungsform der Erfindung dadurch erzielt, dass die erste Massenscheibe mit mindestens zwei, vorzugsweise mindestens drei gekrümmten Langlöchern versehen ist, die sich auf der entsprechenden Massenscheibe in Umfangsrichtung erstrecken, und dabei insbesondere auf einem gemeinsamen Kreisbogen angeordnet sind. Korrespondierend zu diesen Langlöchern sind mindestens zwei, vorzugsweise mindestens drei der Anschläge der zweiten Massenscheibe derart langgestreckt ausgebildet, dass sie durch jeweils eines der Langlöcher hindurchstehen. Alternativ hierzu ist die zweite Massenscheibe mit mindestens zwei, vorzugsweise mindestens drei sonstigen haltebolzen versehen, die durch die Langlöcher hindurchstehen. An ihrem jeweiligen Freiende sind diese Anschläge bzw. Haltebolzen jeweils mit einem Haltekragen versehen, mit dem der jeweilige Anschlag bzw. Haltebolzen das korrespondierende Langloch außenseitig hinterschneidet.

In einer zweckmäßigen Ausführungsform der Erfindung ist für jedes Federelement jeweils einer der beiden zugeordneten Anschläge der zweiten Massenscheibe derart verlängert, dass er durch ein entsprechendes Langloch der ersten Massenscheibe hindurchsteht. Der jeweils andere Anschlag der zweiten Massenscheibe ist demgegenüber verkürzt ausgebildet, so dass er die erste Massenscheibe nicht berührt.

In einer vorteilhaften Ausgestaltung des Zweimassenschwungrades liegen die Massenscheiben in einem Gleitlager mittelbar oder unmittelbar aneinander an, das von den Federelementen ringartig umgeben ist. Das Gleitlager ist also im Bezug auf die Federelemente radial innenseitig angeordnet. Dieses Gleitlager bildet vorzugsweise die einzige Struktur, mit der die beiden Massenscheiben in axial einander zugekehrter Richtung aneinander oder an einer zwischengeordneten Komponente anliegen. An der Peripherie der Massenscheiben (d.h. in dem zum Außenumfang benachbarten Bereich) liegen die Massenscheiben einander dagegen vorzugsweise mit Abstand (berührungsfrei) gegenüber. Die radial innenseitige (achsnahe) Lagerung der beiden Massenscheiben hat den Vorteil, dass hier nur vergleichsweise geringe Relativgeschwindigkeiten der beiden Massenscheiben auftreten, wodurch die Reibungsverluste und die dadurch bedingte Wärmeentwicklung vergleichsweise gering gehalten werden können.

Vorzugsweise ist das Gleitlager schmiermittelfrei. Die beiden Massenscheiben sind somit vorzugsweise ohne zwischengeordnete Schicht aus Schmierfett oder Schmieröl aneinander gelagert. Um die verbleibenden Reibungsverluste zu minimieren, weist das Gleitlager vorzugsweise eine mit einer Anti-Haft-Oberfläche versehene Lauffläche auf. Diese Lauffläche ist insbesondere durch einen ringförmigen Einsatz aus PTFE oder einem anderen Material mit geringem Reibungskoeffizienten gebildet.

Vorzugsweise ist das gesamte Zweimassenschwungrad schmiermittelfrei.

In einer besonders zweckmäßigen Ausgestaltung des Zweimassenschwungrads ist hinsichtlich der Relativverdrehung der beiden Massenscheiben ein Freiwinkel ausgebildet, um den die Massenscheiben rückstellungskraftfrei verdrehbar sind. Der Freiwinkel hat hierbei den Vorteil, dass Drehmomentschwankungen des Antriebs im Nulllastbereich (insbesondere im Leerlauf) durch die rückstellungskraftfreie Verdrehung der Massenscheiben abgefangen werden, wodurch die Kupplung und das nachgeschaltete Getriebe entlastet werden. Der Freiwinkel entspricht in zweckmäßiger Dimensionierung insbesondere einem Drehwinkel von ca. 5° bis 11° um die Drehachse.

Auf einfache, aber robuste und effektive Weise umfasst das Zweimassenschwungrad zur Realisierung dieses Freiwinkels vorzugsweise zusätzlich zu den beiden Massenscheiben eine Zwischenscheibe, die zwischen der ersten Massenscheibe und der zweiten Massenscheibe angeordnet und gegenüber beiden Massenscheiben drehbar gelagert ist. Die Zwischenscheibe ist einerseits mit den an der ersten Massenscheibe fixierten Federelementen gekoppelt, so dass eine Verdrehung der Zwischenscheibe zu der ersten Massenscheibe durch die Federelemente angefedert ist. Andererseits ist die Zwischenscheibe mit Rotationspiel mit der zweiten Massenscheibe gekoppelt, so dass die Zwischenscheibe relativ zu der zweiten Massenscheibe rückstellungskraftfrei um den Freiwinkel verdrehbar ist.

Zur Kopplung der Zwischenscheibe mit der zweiten Massenscheibe ist hierbei bevorzugt an einer Innenseite der zweiten Massenscheibe mindestens ein Vorsprung - insbesondere in Form eines radial ausgerichteten Koppelstegs - angebracht, der mit Rotationspiel zwischen zwei Mitnehmer der Zwischenscheibe eingreift.

Zweckmäßigerweise ist die Zwischenscheibe über eine Anzahl von Anschlaghülsen mit den Federelementen gekoppelt, die zur Reduzierung der Reibungsverluste im Betrieb des Zweimassenschwungrads drehbar auf der Zwischenscheibe gelagert sind.

Jede der Anschlaghülsen ist vorzugsweise in Form einer - insbesondere flachen - Walze ausgebildet, in deren Umfang mindestens eine Nut zur Aufnahme eines Federschenkels eines der Federelemente eingebracht ist.

Jede der Anschlaghülsen weist dabei in zweckmäßiger Ausgestaltung einen Kern aus Kunststoff auf, der zur Stabilisierung umfänglich von einem Außenring aus Metall, insbesondere Stahl, umgeben ist. Zur Reduzierung der Reibung und der Geräuschentwicklung im Betrieb des Zweimassenschwungrads steht dieser Kern innerhalb der oder jeder Nut zweckmäßigerweise über den Außenring hervor, so dass der in der Nut einliegende Federschenkel innerhalb der Nut ausschließlich an dem Kunststoffmaterial des Kerns anliegt.

Das erfindungsgemäße Zweimassenschwungrad ist vorrangig zum Einsatz in einem Kraftfahrzeug, insbesondere einem Personenkraftfahrzeug vorgesehen. Es ist darüber hinaus im Rahmen der Erfindung aber auch bei anderen Kraftmaschinen und Antrieben zur Torsionsdämpfung einsetzbar.

Nachfolgend wird ein Ausführungsbeispiel der Erfindung anhand einer Zeichnung näher erläutert. Darin zeigen:
- Fig. 1: In perspektivischer Darstellung ein Zweimassenschwungrad in zusammengebautem Zustand mit Blick auf eine erste Massenscheibe, die hier bestimmungsgemäß als primäre Schwungmasse mit dem Motor eines Kraftfahrzeugs zu verbinden ist,
- Fig. 2: in perspektivischer Darstellung das Zweimassenschwungrad gemäß Fig. 1 mit Blick auf eine zweite Massenscheibe, die hier als sekundäre Schwungmasse mit der Kupplung zu verbinden ist,
- Fig. 3: in perspektivischer Darstellung mit Blick auf eine Innenseite die erste Massenscheibe des Zweimassenschwungrades mit acht daran gelagerten Federelementen in Form von Schenkelfedern sowie sechzehn Anschlagbolzen, an denen die Federelemente an der ersten Massenscheibe widergelagert sind,
- Fig. 4: in perspektivischer Darstellung mit Blick auf eine Innenseite die zweite Massenscheibe des Zweimassenschwungrades mit sechszehn, daran befestigten Anschlagbolzen, über die die zweite Massenscheibe mit den Federelementen gekoppelt ist,
- Fig. 5-7: jeweils in schematischer, perspektivischer Darstellung anhand einer anderen Ausführung des Zweimassenschwungrades das Zusammenspiel zwischen den Federelementen, den Anschlagbolzen der ersten Massenscheibe und den Anschlagbolzen der zweiten Massenscheibe,
- Fig. 8: in Darstellung gemäß Fig. 1 eine weitere Ausführungsform des Zweimassenschwungrads,
- Fig. 9: in Darstellung gemäß Fig. 2 das Zweimassenschwungrad gemäß Fig. 8,
- Fig. 10: in Darstellung gemäß Fig. 3 die erste Massenscheibe des Zweimassenschwungrads gemäß Fig. 8 mit den daran gelagerten Federelementen,
- Fig. 11: in Darstellung gemäß Fig. 4 die zweite Massenscheibe des Zweimassenschwungrads gemäß Fig. 8,
- Fig. 12: in perspektivischer Darstellung eine zwischen der ersten Massenscheibe und der zweiten Massenscheibe angeordnete Zwischenscheibe des Zweimassenschwungrads gemäß Fig. 8 mit darauf aufgesteckten Anschlaghülsen, über die die Zwischenscheibe auf die Federelemente wirkt,
- Fig. 13: in Darstellung gemäß Fig. 10 die erste Massenscheibe des Zweimassenschwungrads gemäß Fig. 8 mit eingelegter Zwischenscheibe,
- Fig. 14: in perspektivischer Darstellung eine der auf der Zwischenscheibe des Zweimassenschwungrads gemäß Fig. 8 aufgesteckten Anschlaghülsen,
- Fig. 15: in einem Querschnitt XV-XV gemäß Fig. 14 die dortige Anschlaghülse, und
- Fig. 16: in Draufsicht eine alternative Ausführungsform der Federelemente für das Zweimassenschwungrad.

Einander entsprechende Teile sind in allen Figuren stets mit gleichen Bezugszeichen versehen.

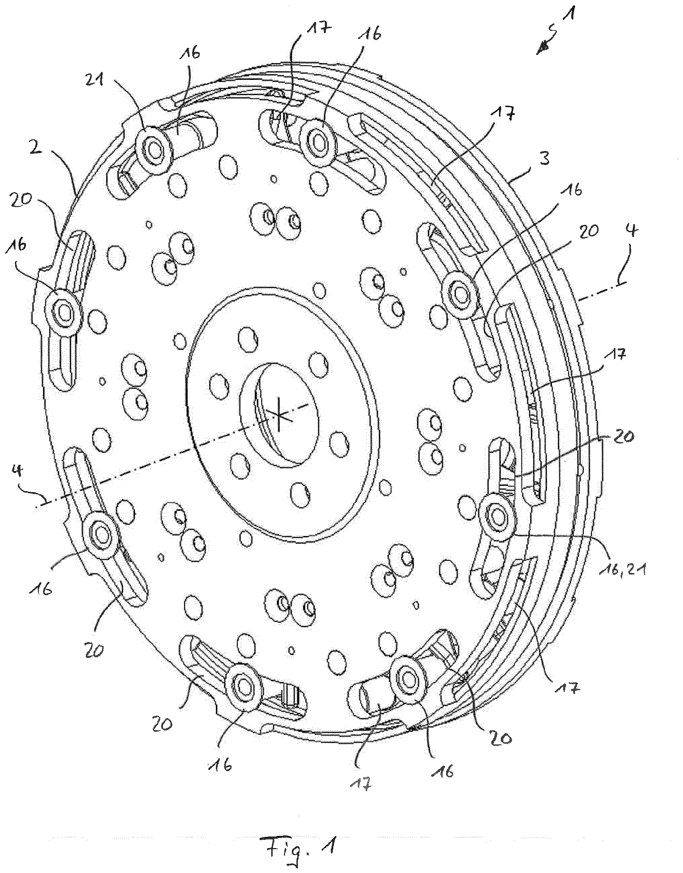

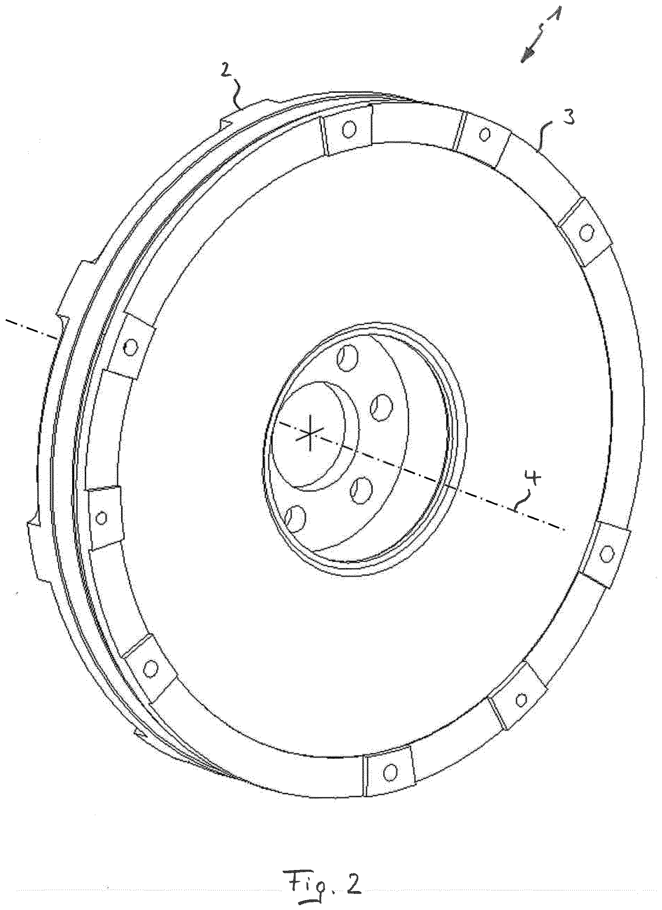

Das in den Fig. 1 bis 4 in einem ersten Ausführungsbeispiel dargestellte Zweimassenschwungrad 1 umfasst eine erste Massenscheibe 2 sowie eine zweite Massenscheibe 3. Im Betrieb ist die erste Massenscheibe 2 innerhalb des Antriebstrangs eines Kraftfahrzeugs bestimmungsgemäß als primäre Schwungmasse mit der Kurbelwelle eines Antriebsmotors gekoppelt. Die zweite Massenscheibe 3 ist dagegen im Einbauzustand bestimmungsgemäß mit der Reibscheibe der Kupplung verbunden.

Im Einbauzustand innerhalb des Antriebsstrangs des Kraftfahrzeugs sind die beiden Massenscheiben 2 und 3 um eine gemeinsame Drehachse 4 drehbar gelagert. Um diese Drehachse 4 sind die beiden Massenscheiben 2 und 3 auch relativ zueinander um einen vorgegebenen Winkelbereich von beispielsweise ca. 30° verdrehbar.

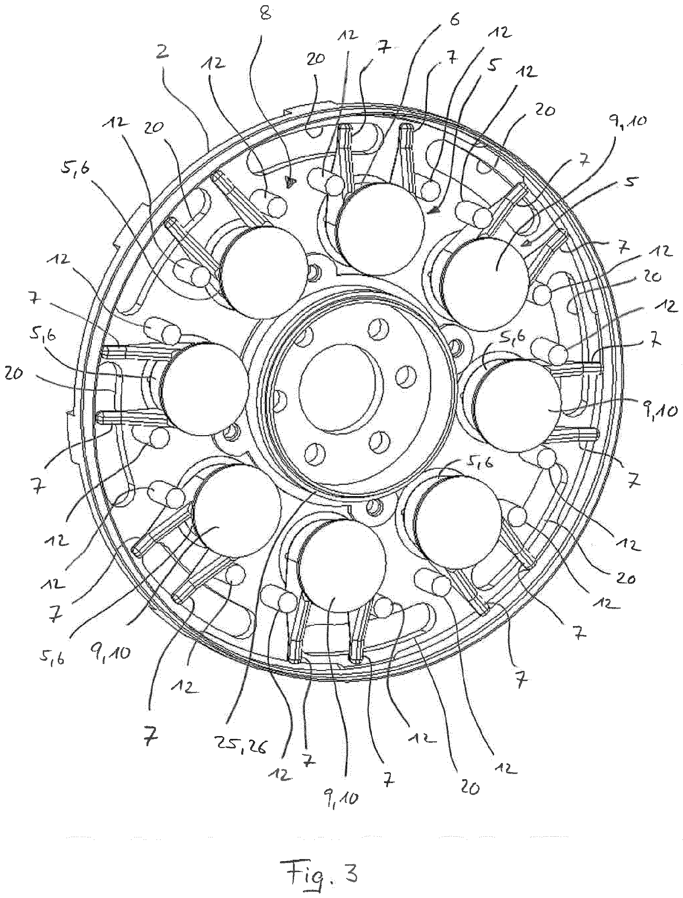

Zur Dämpfung von Drehmomentstößen innerhalb des Antriebsstrangs ist diese Relativverdrehung der beiden Massenscheiben 2 und 3 durch acht Federelemente 5 (Fig. 3) angefedert, die zwischen den Massenscheiben 2 und 3 angeordnet sind. Die Federelemente 5 sind hierbei durch baugleiche Schenkelfedern gebildet, die jeweils einen gewendelten Federkörper 6 und zwei von diesen abstehende Federschenkel 7 umfassen. Der Federkörper 6 umfasst beispielsweise eineinhalb Windungen aus einem aus Federstahl gebildeten Federdraht mit rechteckigem Querschnitt, so dass die - ebenfalls aus dem Federdraht gebildeten - Federschenkel 7 parallel zueinander in gleiche Richtung von dem Federkörper 6 abstehen. In dem Ausführungsbeispiel nach den Fig. 1 bis 4 sind die Federelemente 5 derart an der ersten Massenscheibe 2 gelagert, dass ihre Federschenkel 7 radial nach außen (von der Drehachse 4 weg) gerichtet sind. Die gleichmäßig über den Umfang der ersten Massenscheibe 2 verteilten Federelemente 5 bilden somit eine sternförmige Struktur aus.

Zur Lagerung der Federelemente 5 sind an einer Innenseite 8 der ersten Massenscheibe 2, die im montierten Zustand des Zweimassenschwungrads 1 der zweiten Massenscheibe 3 zugewandt ist, acht zylindrische Haltevorsprünge 9 angebracht. Die Haltevorsprünge 9 können hierbei wahlweise einstückig aus dem Material der ersten Massenscheibe 2 ausgeformt oder als separate und nachträglich mit der ersten Massenscheibe 2 verbundene (insbesondere verschraubte) Teile gebildet sein. Zur Verminderung von Reibungsverlusten ist das jeweils zugeordnete Federelement 5 nicht unmittelbar auf den metallenen Haltevorsprung 9 aufgesetzt. Vielmehr ist jedem Haltevorsprung 9 und dem Federkörper 6 jeweils eine Hülse 10 aus PTFE zwischengeordnet, die eine Anti-Haft-Oberfläche für das aufgesetzte Federelement 5 bildet. Die Hülsen 10 umgreifen die axial entgegengesetzten Stirnseiten des jeweiligen Federkörpers 6 dabei beidseitig jeweils mit einem Kragen 11, so dass zur weiteren Reduzierung von Reibungsverlusten eine direkte Berührung zwischen dem Federkörper 6 des jeweiligen Federelements 5 und den Massenscheiben 2, 3 unterbunden ist.

Hinsichtlich ihrer Ausrichtung sind die Federelemente 5 an der ersten Massenscheibe 2 durch jeweils zwei Anschlagbolzen 12 fixiert, wobei diese Anschlagbolzen 12 die Federschenkel 7 des jeweils zugeordneten Federelements 5 jeweils in Umfangsrichtung außenseitig flankieren. Die Anschlagbolzen 12, die ebenfalls wahlweise einstückig aus dem Material der ersten Massenscheibe 2 ausgeformt oder als separate Teile mit der ersten Massenscheibe 2 (z.B. durch Verschraubung, Verpressung und/oder Verschweißung) nachträglich verfügt sein können, beschränken zudem die Aufspreizung des jeweils zugeordneten Federelements 5. Die Federelemente 5 liegen hierbei wahlweise lose (ohne Vorspannung) oder mit Vorspannung zwischen den Anschlagbolzen 12 ein.

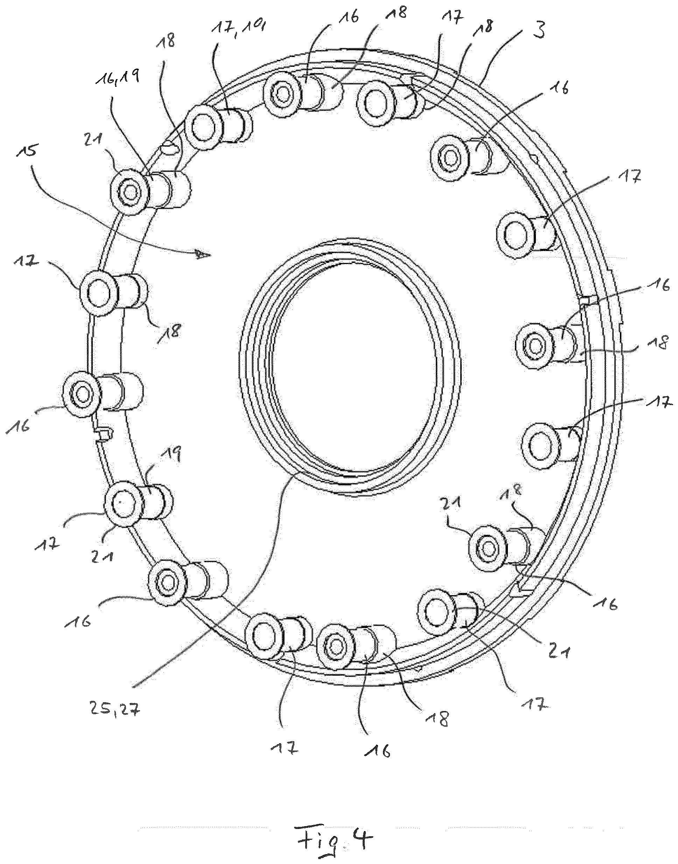

Wie Fig. 4 zu entnehmen ist, sind andererseits an einer Innenseite 15 der zweiten Massenscheibe 3 zu jedem der Federelemente 5 jeweils zwei Anschlagbolzen 16 und 17 angebracht, über die die zweite Massenscheibe 3 mit den Federelementen 5 zusammenwirkt. Im zusammengesetzten Zustand der Massenscheiben 2 und 3 ist jeweils ein Paar von Anschlagbolzen 16 und 17 bezüglich eines zugeordneten Federelements 5 derart angeordnet, dass diese Anschlagbolzen 16 und 17 die Federschenkel 7 des Federelements 5 in Umfangsrichtung außenseitig flankieren. Die Anschlagbolzen 16 und 17 sind hierbei radial außenseitig der Anschlagbolzen 12 der ersten Massenscheibe 2 angeordnet.

Wie aus der Darstellung gemäß Fig. 4 erkennbar ist, ist jeder der Anschlagbolzen 16 und 17 aus einem metallenen Sockel 18 mit einer darauf aufgesetzten Gleithülse 19 aus PTFE gebildet. Der Sockel 18 ist hierbei entweder einstückig mit der Massenscheibe 3 ausgebildet oder mit dieser nachträglich (wiederum durch Verschraubung, Verpressung und/oder Verschweißung) verfügt. Aus Fig. 4 ist ersichtlich, dass sich die Anschlagbolzen 16 von den Anschlagbolzen 17 durch ihre - in Richtung der Drehachse 4 gemessene - Höhe unterscheiden. So sind die Anschlagbolzen 16 aufgrund entsprechender Ausbildung des Sockels 18 höher als die Anschlagbolzen 17 ausgebildet. In zusammengesetztem Zustand der Massenscheiben 2 und 3 ragen die Anschlagbolzen 16 daher durch die gegenüberliegende Massenscheibe 2 hindurch, während die Anschlagbolzen 17 mit Abstand zu der Massenscheibe 2 enden und diese somit nicht berühren. Die höheren Anschlagbolzen 16 liegen hierbei in gekrümmten Langlöchern 20 (Fig.1) ein, die in die Peripherie der Massenscheibe 2 eingebracht sind und dort jeweils in Umfangsrichtung auf einem gemeinsamen Kreisbogen liegen. Um die Massenscheiben 2 und 3 aneinander zu fixieren, sind die Gleithülsen 19 der höheren Anschlagbolzen 16 außenseitig jeweils mit einem Haltekragen 21 versehen, mit dem die jeweilige Gleithülse 19 das korrespondierende Langloch 20 hinterschneidet.

Die Gleithülsen 19 sind vorzugsweise mit dem jeweils korrespondierenden Sockel des Anschlagbolzens 16 oder 17 verschraubt.

In axial aufeinander zugewandter Richtung liegen die beiden Massenscheiben 2 und 3 lediglich in einem Gleitlager 25 aneinander an, das innerhalb der kranzartigen Anordnung der Federelemente 5 ausgebildet ist. Das Gleitlager 25 ist hierbei einerseits gebildet durch einen Lagerkranz 26, der als separates Teil ausgebildet und mit der Massenscheibe 2 verschraubt ist. Der andere Teil des Gleitlagers 25 ist durch einen Laufring 27 aus PTFE gebildet, der in eine zugehörige Vertiefung in der Massenscheibe 3 eingesetzt ist.

An ihrem jeweiligen Außenumfang stehen die Massenscheiben 2, 3 einander berührungsfrei gegenüber.

Das gesamte Zweimassenschwungrad 1 ist schmiermittelfrei. Sowohl das Gleitlager 25 als auch die Federelemente 5 als auch die in den Langlöchern 20 einliegenden Anschläge 16 sind somit nicht in Schmierfett oder Schmieröl eingebettet. Zumal daher ein Austreten von Schmiermittel von Haus aus ausgeschlossen ist, ist das Zweimassenschwungrad 2 in bevorzugter Ausgestaltung nach außen hin nicht fluiddicht gestaltet. Vielmehr steht der zwischen den Massenscheiben 2 und 3 gebildete Innenraum - wie insbesondere aus Fig. 1 erkennbar ist - über eine Vielzahl von Öfnungen mit dem Außenraum in Verbindung. Dies bewirkt insbesondere eine effektive Kühlung des Zweimassenschwungrads 1.

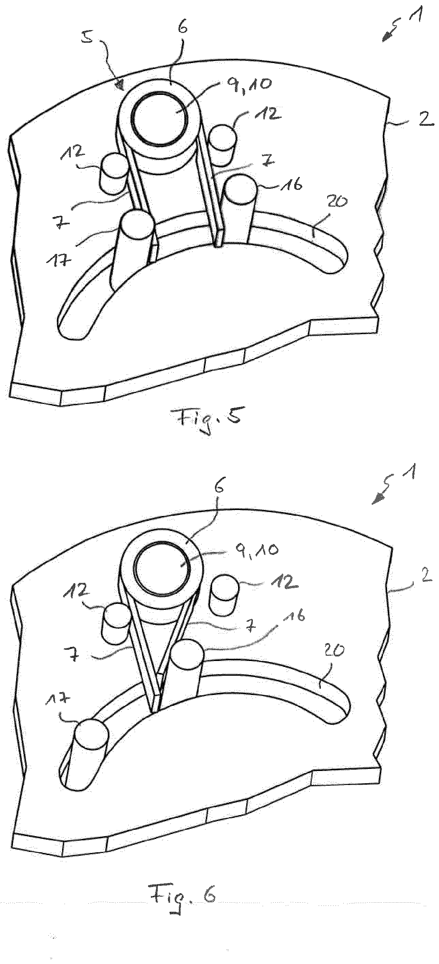

Das Zusammenspiel zwischen den Federelementen 5, den Anschlagbolzen 12 der ersten Massenscheibe 2 sowie den Anschlagbolzen 16 und 17 der zweiten Massenscheibe 3 ist schematisch in den Fig. 5 bis 7 dargestellt. Diese Figuren zeigen hierbei ein zweites Ausführungsbeispiel des Zweimassenschwungrads 1, bei der die Federelemente 5 mit radial nach innen ausgerichteten Federschenkeln 7 an der Massenscheibe 2 gelagert sind, und bei der die Anschlagbolzen 16 und 17 sowie die Langlöcher 20 entsprechend auch radial innenseitig der Anschlagbolzen 12 angeordnet sind. Zudem stehen in der Ausführungsform gemäß den Fig. 5 bis 7 jeweils beide Anschlagbolzen 16 und 17 durch die in die Massenscheibe 2 eingebrachten Langlöcher 20 hindurch. Von der grundsätzlichen Funktion gleicht das Zweimassenschwungrad 1 gemäß Fig. 5 bis 7 aber der anhand der Fig. 1 bis 4 dargestellten Ausführungsform, so dass die folgenden Ausführungen für beide Ausführungsformen des Zweimassenschwungrads 1 in gleicher Weise Gültigkeit haben.

Fig. 5 zeigt das Zweimassenschwungrad 1 hierbei zunächst in einer Ruhelage (in Bezug auf die relative Drehstellung der beiden Massenscheiben 2 und 3 zueinander), in der das Federelement 5 kein zwischen den Massenscheiben 2 und 3 wirkendes Drehmoment erzeugt. Die Drehstellung der in der Fig. 5 selbst nicht dargestellten Massenscheibe 3 ist hierbei durch die Lage der an dieser Massenscheibe 3 befestigten Anschlagbolzen 16 und 17 in dem Langloch 20 charakterisiert.

Fig. 6 zeigt demgegenüber einen Zustand des Zweimassenschwungrads 1, in dem die zweite Massenscheibe 3 gegenüber der ersten Massenscheibe 2 im Gegenuhrzeigersinn verdreht ist, wodurch die Anschlagbolzen 16 und 17 in dem Langloch 20 nach links verschoben sind. Bei dieser Verdrehung der Massenscheiben 2 und 3 nimmt der Anschlagbolzen 16 den rechten Federschenkel 7 des Federelements 5 mit. Das an dem anderen Federschenkel 7 durch den Anschlagbolzen 12 widergelagerte Federelement 5 wird hierdurch gespannt. Der Federweg des Federelements 5, und hierdurch der Winkel, um den die Massenscheibe 3 gegenüber der Massenscheibe 2 verdreht werden kann, wird begrenzt dadurch, dass der Anschlagbolzen 16 an dem linken Federschenkel 7 des Federelements 5, und somit mittelbar an dem dortigen Anschlagbolzen 12 anschlägt. Durch das gespannte Federelement wird ein rückstellendes Drehmoment auf die Massenscheiben 2 und 3 ausgeübt, das die Massenscheiben 2 und 3 in die Ruhelage gemäß Fig. 5 zurücktreibt.

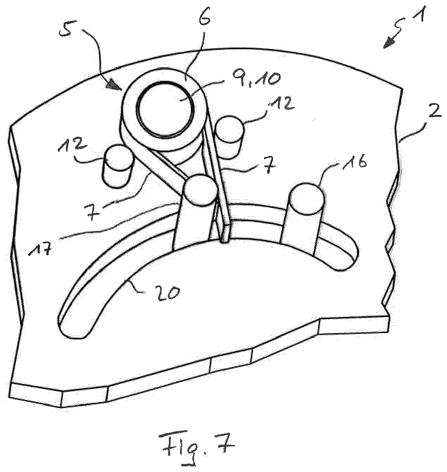

Fig. 7 zeigt einen zur Fig. 6 entgegengesetzten Zustand des Zweimassenschwungrads 1, bei dem die Massenscheibe 3 im Uhrzeigersinn gegenüber der Massenscheibe 2 verdreht ist, so dass die Anschlagbolzen 16 und 17 in dem Langloch 20 nach rechts verschoben sind. In diesem Zustand nimmt der Anschlagbolzen 17 den linken Federschenkel 7 des Federelements 5 mit, so dass das wiederum am gegenüberliegenden Anschlagbolzen 12 widergelagerte Federelement 5 gespannt wird. Auch in diesem Fall wird der Federweg des Zweimas senschwungrads 1 dadurch begrenzt, dass der Anschlagbolzen 17 an dem rechten Federschenkel 7, und somit mittelbar an dem dortigen Anschlagbolzen 12 anschlägt. Das gespannte Federelement 5 erzeugt in diesem Zustand wiederum ein rückstellendes Drehmoment, dass die beiden Massenscheiben 2 und 3 in die Ruhelage gemäß Fig. 5 zurücktreibt.

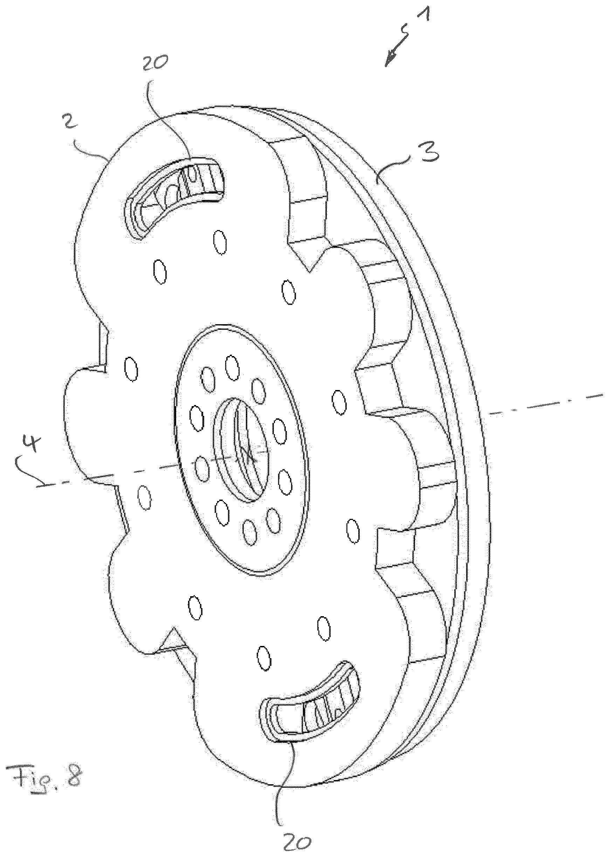

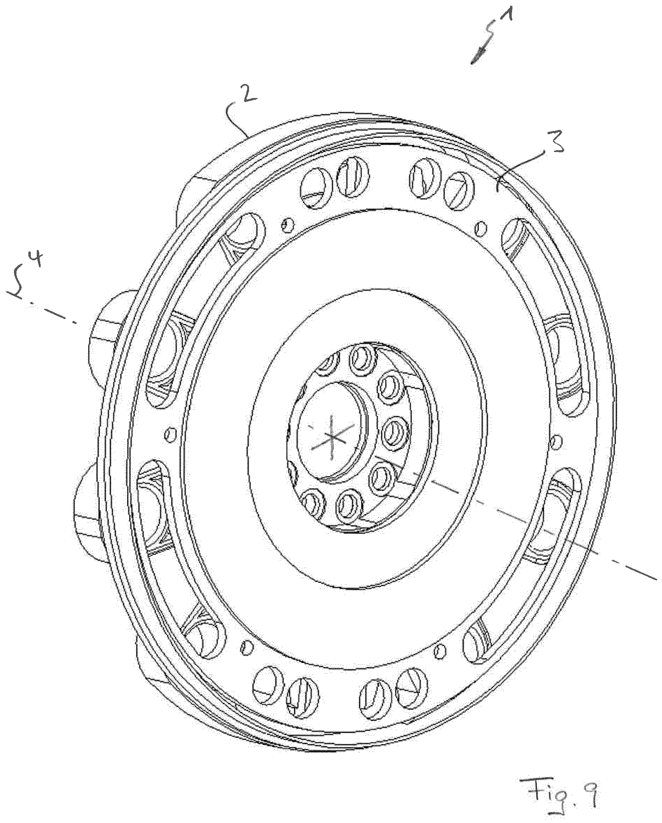

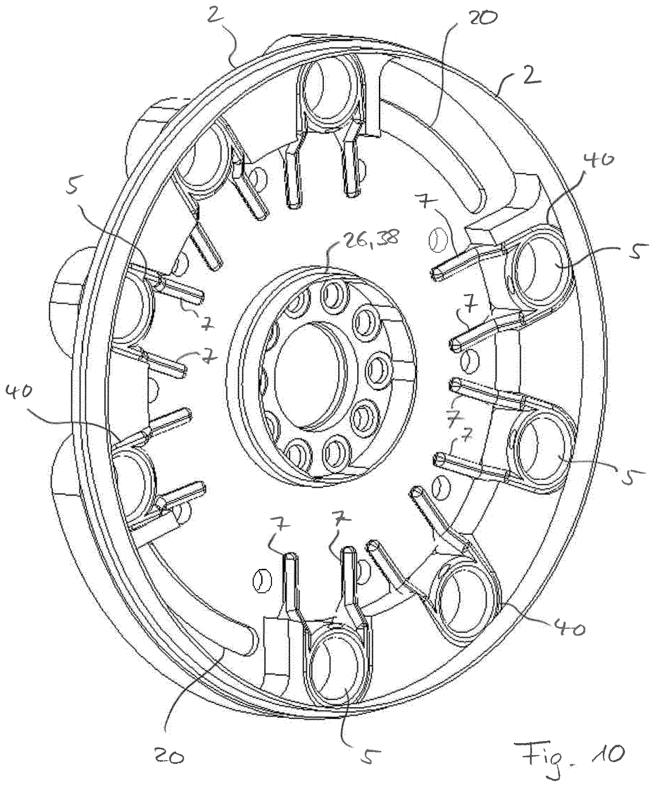

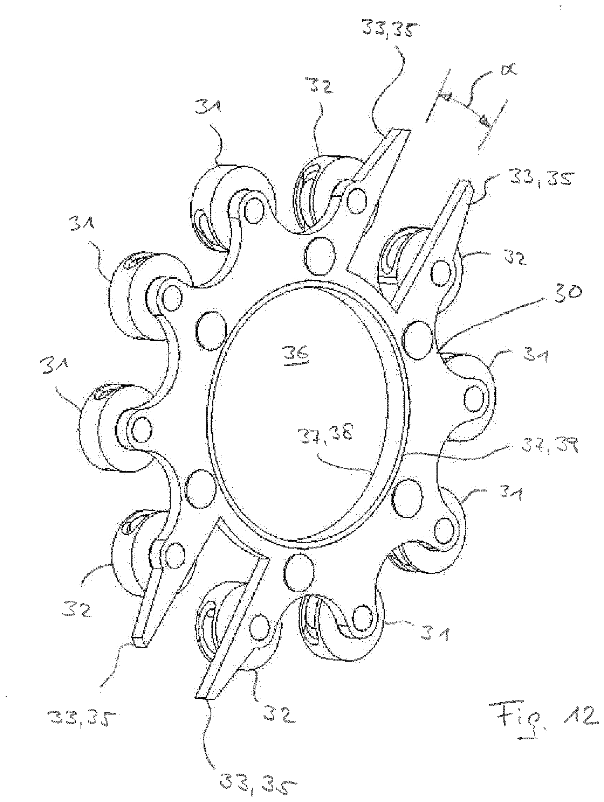

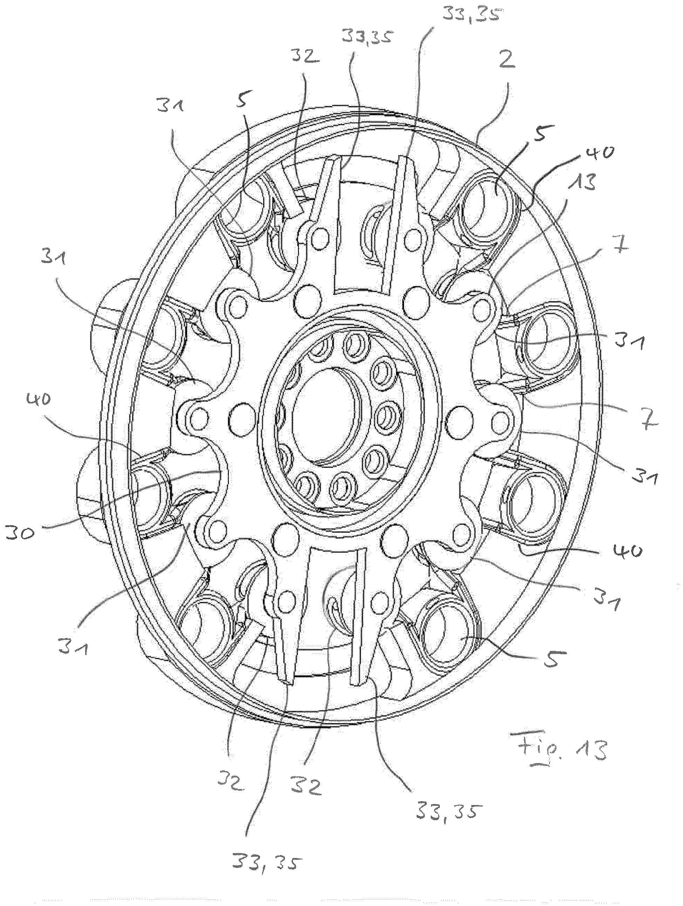

Eine weitere Ausführungsform des Zweimassenschwungrads 1 ist in den Fig. 8 bis 13 dargestellt. Diese Ausführungsform unterscheidet sich von den vorstehend beschriebenen Ausführungsformen des Zweimassenschwungrads 1 vor allem dadurch, dass den Massenscheiben 2 und 3 eine Zwischenscheibe 30 (Fig. 12 und 13) zwischengeordnet ist. Diese Zwischenscheibe 30 ermöglicht einen definierten Freiwinkel α (Fig. 12) von etwa 5° bis 11° (beispielsweise 6°). Der Freiwinkel α definiert ein Drehwinkelintervall, um das die Massenscheiben 2,3 gegeneinander verdrehbar sind, ohne dass dieser Verdrehung eine nennenswerte Rückstellkraft entgegengesetzt ist. Der Freiwinkel α ist hierbei vorteilhaft, um Drehmomentschwankungen des Antriebs im Nulllastbereich (insbesondere im Leerlauf) abzufangen und somit das Getriebe zu entlasten.

An der Zwischenscheibe 30 sind einerseits Anschlaghülsen 31 und 32 angebracht, die die Federschenkel 7 der Federelemente 5 in Umfangsrichtung außenseitig flankieren und bei einer - den Freiwinkel α überschreitenden - Relativverdrehung der Massenscheiben 2,3 aus ihrer Ruhelage auslenken. Die Anschlaghülsen 31 und 32 entsprechen somit ihrer Funktion nach den Anschlagbolzen 16,17 der vorstehend beschriebenen Ausführungsbeispiele (und insbesondere den Gleithülsen 19 dieser Anschlagbolzen 16,17). Im Unterschied zu den Anschlagbolzen 16,17 sind die Anschlaghülsen 31 allerdings derart breit dimensioniert, dass jede Anschlaghülse 31 gleichzeitig an zwei Federschenkeln 7 zweier aneinander angrenzender Federelemente 5 anliegt. Dies wird begünstigt dadurch, dass die Federelemente 5 bei dem Zweimassenschwungrad 1 gemäß Fig. 8 bis 13 in zwei Gruppen zu jeweils vier Federelementen 5 auf der ersten Massenscheibe 2 angeordnet sind. Innerhalb einer jeden Gruppe sind die Federelemente 5 - in Umfangsrichtung der Massenscheibe 2 gesehen - vergleichsweise dicht benachbart angeordnet, während zwischen den beiden Gruppen jeweils größere Freiräume gebildet sind. Die jeweils mit zwei Federschenkeln 7 in Kontakt stehenden Anschlaghülsen 31 sind hierbei zwischen jeweils zwei Federelementen 5 der gleichen Gruppe angeordnet. Die Anschlaghülsen 32, die zwischen den beiden Gruppen von Federelementen 5 angeordnet sind, stehen - aufgrund des hier größeren Abstands zwischen den Federelementen 5 - dagegen jeweils nur mit einem Federschenkel 7 in Kontakt. Die Anschlaghülsen 31 und 32 sind derart dimensioniert und auf der Zwischenscheibe 30 angeordnet, dass sie die Federelemente 5 - auch und gerade in der Ruhelage der Massenscheiben 2,3 - in vorgespanntem Zustand halten. Die Anschlaghülsen 31,32 sind jeweils drehbar an der der Massenscheibe 2 zugewandten Stirnseite der Zwischenscheibe 30 gelagert.

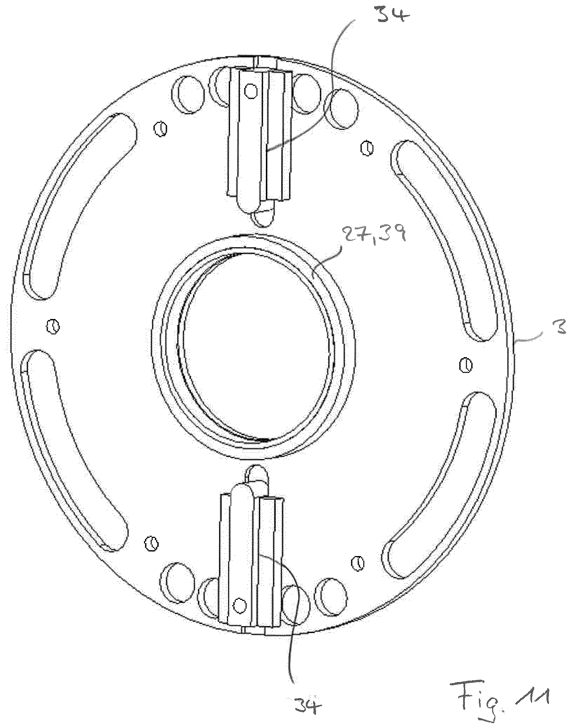

Andererseits ist die Zwischenscheibe 30 mit zwei - um den Umfang der Zwischenscheibe 30 einander diametral gegenüberliegenden - Mitnehmerpaaren 33 versehen, von denen jedes mit einem länglichen Koppelsteg 34 (Fig. 11) der zweiten Massenscheibe 3 zusammenwirkt.

Jeder der beiden Koppelstege 34 ist derart an der Massenscheibe 3 angebracht, dass er von der Innenseite der Massenscheibe 3 in Richtung auf die Zwischenscheibe 30 abragt und hinsichtlich seiner Längserstreckung exakt oder zumindet näherungsweise radial ausgerichtet ist. Die Koppelstege 34 können dabei einstückig mit der zweiten Massenscheibe 3 ausgebildet sein oder - wie in Fig. 11 exemplarisch dargestellt ist - als separate Teile gefertigt sein, die nachträglich mit der zweiten Massenscheibe 3 verbunden sind.

Jedes Mitnehmerpaar 33 umfasst zwei Mitnehmer 35 (Fig. 12 und 13), die vorzugsweise einstückig mit der Zwischenscheibe 30 ausgebildet sind und - etwa nach Art zweier gespreizter Finger - etwa radial von dem Außenumfang der Zwischenscheibe 30 abragen. In montiertem Zustand des Zweimassenschwungrades 1 liegen die Mitnehmer 35 mit (Rotations-)Spiel in den zwischen den Gruppen der Federelemente 5 gebildeten Freiräumen ein.

In montiertem Zustand liegt jeder der beiden Koppelstege 34 formschlüssig zwischen den Mitnehmern 35 des jeweils korrespondierenden Mitnehmerpaares 33 ein, wodurch die zweite Massenscheibe 3 mit der Zwischenscheibe 30 bezüglich einer Relativverdrehung dieser beiden Teile gekoppelt ist. Die Koppelstege 34 liegen hierbei zur Realisierung des Freiwinkels α jeweils mit Spiel zwischen den Mitnehmern 35 des korrespondierenden Mitnehmerpaares 33 ein. Die Mitnehmer 35 sind vorzugsweise an den den Koppelstegen 34 zugewandten Rändern jeweils mit Auflagen aus Kunststoff oder Gummi (z.B. SI/VMQ oder FPM/FKM) überzogen, um Drehmomentstöße beim Aufschlagen der Koppelstege 34 auf den Mitnehmern 35 abzufangen und somit die Geräuschbildung im Betrieb des Zweimassenschwungrads 1, insbesondere bei Starten oder Abschalten des Antriebs, zu dämpfen.

Die Zwischenscheibe 30 weist eine zentrale Durchführung 36 (Fig. 12) auf. An ihrem durch den Rand der Durchführung 36 definierten Innenumfang ist die Zwischenscheibe 30 mit einem Lagerring 37 versehen, der in Zusammenwirkung mit dem Lagerkranz 26 der ersten Massenscheibe ein (wiederum schmiermittelfreies) Gleitlager 38 bildet, mittels dessen die Zwischenscheibe 30 drehbar an der ersten Massenscheibe 2 gelagert ist. An der der zweiten Massenscheibe 3 zugewandeten Seite der Zwischenscheibe 30 wirkt der Lagerring 37 mit dem dortigen Lagerring 27 zur Bildung eines weiteren (ebenfalls schmiermittelfreien) Gleitlagers 39 zusammen, mittels dessen die Zwischenscheibe 30 drehbar an der zweiten Massenscheibe 3 gelagert ist.

Zusammengehalten wird das Zweimassenschwungrad 1 in montiertem Zustand durch zwar (nicht explizit dargestellte) Haltebolzen, die einerseits - beispielsweise durch Verschraubung - an den Koppelstegen 34 der zweiten Massenscheibe 3 fixiert, und andererseits in den Langlöchern 20 der ersten Massenscheibe 2 geführt sind. Analog zu den Gleithülsen 19 der Anschlagbolzen 16 des ersten Ausführungsbeispiels sind die Haltebolzen außenseitig jeweils mit einem Haltekragen versehen, mit dem der jeweilige Haltebolzen das korrespondierende Langloch 20 hinterschneidet.

Das Zweimassenschwungrad 1 gemäß Fig. 8 bis 13 unterscheidet sich von den vorstehend beschriebenen Ausführungsbeispielen ferner auch dadurch, dass die Federelemente 5 - deren Federschenkel 7 analog zu dem zweiten Ausführungsbeispiel etwa radial nach innen ragen - nicht mit ihrem jeweiligen Federkörper 6 auf Haltevorsprünge 9 der ersten Massenscheibe 2 aufgesteckt sind. Vielmehr ist die erste Massenscheibe 2 in der Ausführung gemäß Fig. 8 bis 13 innenseitig mit Aussparungen 40 (d.h. muldenförmigen Aufnahmen) versehen, in die jeweils eines der Federelemente 5 eingelegt ist. Die Aussparungen 40 weisen jeweils eine an den Außenumfang der Federelemente 5 angepasste Form auf, so dass das jeweilige Federelement 5 im Wesentlichen passgenau (mit lediglich geringem Spiel) in der korrespondierenden Aussparung 40 einliegt und gegenüber der ersten Massenscheibe 2 drehfest gehalten ist. Die endseitig aus der Aussparung 40 herausragenden Federschenkel 7 werden außenseitig von Seitenwänden der zugehörigen Aussparung 40 flankiert, so dass eine Spreizung der Federschenkel 7 durch die Seitenwände der Aussparung 40 blockiert wird. Die Federschenkel 7 können somit bei Verdrehung der Zwischenscheibe 30 gegenüber der ersten Massenscheibe 2 nur - in der anhand der Fig. 6 und 7 dargestellten Weise - aufeinander zu gebogen werden. Die Seitenwände der Aussparungen 40 übernehmen insofern die Funktion der Anschlagbolzen 12 der vorstehenden Ausführungsbeispiele.

Auch in dem Ausführungsbeispiel gemäß Fig. 8 bis 13 ist die Massenscheibe 1 schmiermittelfrei.

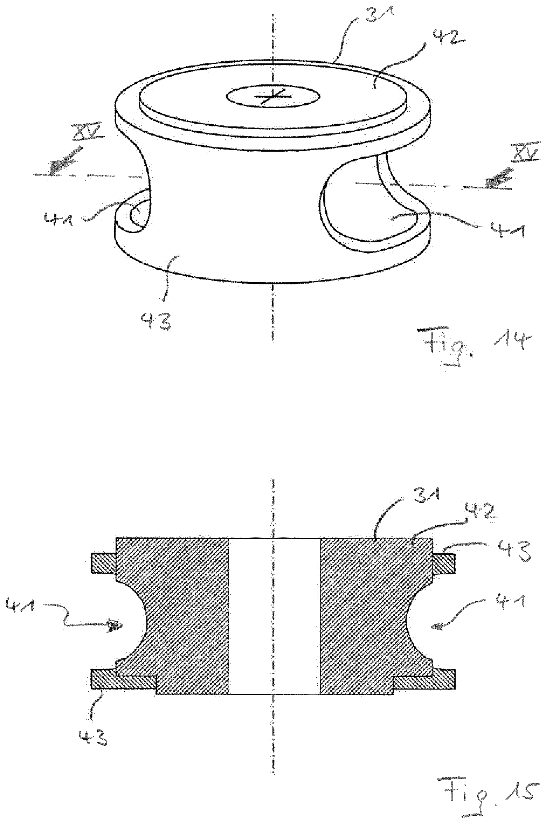

In den Fig. 14 und 15 ist eine der Anschlaghülsen 31 in größerem Detail dargestellt. Hieraus ist ersichtlich, dass die Anschlaghülsen 31 jeweils die Form einer flachen Walze (d.h. eines Hohlzylinders mit einer gegenüber seinem Außendurchmeser geringen axialen Höhe) aufweisen, in deren Außenumfang zwei Nuten 41 zur Aufnahme jeweils eines Federschenkels 7 der angrenzenden Federelemente 5 eingebracht (insbesondere eingefräst) sind.

Aus den Fig. 14 und 15 ist weiterhin ersichtlich, dass die Anschlaghülsen 31 jeweils durch einen Kern 42 gebildet sind, der von einem Außenring 43 umfasst wird. Der Kern 42 besteht hierbei aus einem Kunststoff, insbesondere carbonfaserverstärktem Polyetheretherketon (z.B. PEEK CF 30). Der Außenring 43 besteht dagegen aus Stahl und dient dazu, ein Platzen des Kerns 42 unter starker Belastung zu verhindern. Im Bereich der Nuten 41 steht der Kern 42 über den Außenring 43 hervor, so dass in den Nuten 41 einliegenden Federschenkel 7 den stählernen Außenring 43 unter regelmäßigen Umständen nicht berühren, sondern ausschließlich mit dem Kunststoffmaterial des Kerns 42 in Kontakt stehen.

Die Anschlaghülsen 32 sind der Einfachheit halber vorzugsweise identisch mit den Anschlaghülsen 31 ausgebildet und weisen insofern insbesondere ebenfalls zwei umfänglich eingebrachten Nuten 41 auf. Abweichend davon können die Anschlaghülsen 32 aber auch mit lediglich einer einzigen Nut 41 versehen sein.

Zur Herstellung einer jeden Anschlaghülse 31 oder 32 wird zunächst der Außenringe 43, beispielsweise durch Fräsen hergestellt. Der Außenring 43 wird hierbei bereits vor dem Einsetzen des Kerns 42 mit der Nut 41 oder den beiden Nuten 41 versehen. Anschließend wird der Kern 42 in den Außenring 43 eingepresst. Der Kern 42 kann dabei grundsätzlich mit bereits vorgeformter Nut 41 bzw. vorgeformten Nuten 41 in den Außenring 43 eingepresst werden. Vorzugsweise wird aber ein zylindrischer Rohling des Kerns 42 (ohne vorgeformte Nut 41) in den Außenring 43 eingepresst. Die oder jede Nut 41 wird dabei erst nach dem Einpressen des Rohlings aus dem Kunststoffmaterial des Kerns 42 herausgefräst.

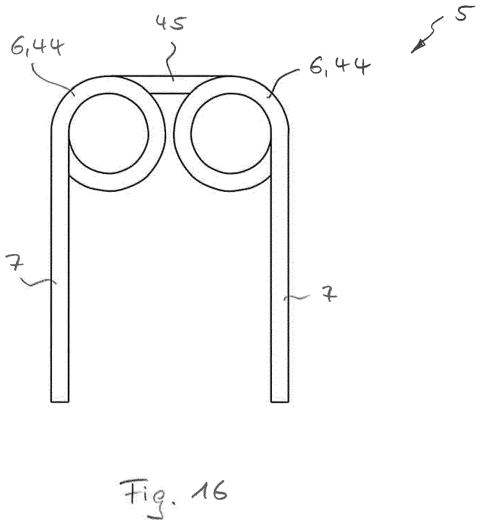

Fig. 16 zeigt schließlich eine alternative Ausführung der Federelemente 5, die bei allen vorstehend beschriebenen Ausführungsbeispielen des Zweimassenschwungrads 1 anstelle der dortigen Federelemente 5 zum Einsatz kommen kann. Das in Fig. 16 dargestellte Federelement 5 ist als Schenkelfeder mit doppeltem Federkörper 6 ausgebildet. Der gewendelte Federkörper 6 ist hier somit in zwei nebeneinander angeordnete Teilwendeln 44 aufgeteilt, die über einen Verbindungsstrang 45 miteinander einstückig verbunden sind. Die in Fig. 16 dargestellte Ausführung des Federelements 5 hat gegenüber der vorstehend beschriebenen Ausführung mit einfach gewendeltem Federkörper 6 den Vorteil, dass sich der Federkörper 6 bei entsprechender Belastbarkeit und Federhärte des Federelements 5 besonders platzsparend (bauraum-optimiert) gestalten lässt.

Bei Einsatz des Federelements 5 gemäß Fig. 16 bei dem ersten oder zweiten Ausführungsbeispiel des Zweimassenschwungrads 1 sind die dortigen Haltevorsprünge 9 durch jeweils zwei Haltevorsprünge zu ersetzen, auf die das Federelement 5 mit den beiden Teilwendeln 44 aufgeschoben wird. Bei Einsatz des Federelements 5 gemäß Fig. 16 bei dem dritten Ausführungsbeispiel des Zweimassenschwungrads 1 sind die dortigen Aussparungen 40 an die Außenkontur des Federelements 5 gemäß Fig. 16 anzupassen.

Die Erfindung wird anhand der vorstehend beschriebenen Ausführungsbeispiele besonders deutlich, ist gleichwohl auf diese Ausführungsbeispiele aber nicht beschränkt. Vielmehr können weitere Ausführungsformen der Erfindung aus den Ansprüchen und der vorstehenden Beschreibung abgeleitet werden.

## Patentansprüche

1. Zweimassenschwungrad (1), mit einer ersten Massenscheibe (2) und einer zweiten Massenscheibe (3), die um eine Drehachse (4) relativ zueinander verdrehbar sind, sowie mit einer Anzahl von dazwischen angeordneten Federelementen (5), durch welche die Verdrehung der Massenscheiben (2,3) relativ zueinander angefedert ist, wobei jedes dieser Federelemente (5) einen gewendelten Federkörper (6) sowie zwei im Wesentlichen tangential von diesem abstehende Federschenkel (7) aufweist, **dadurch gekennzeichnet, dass** die beiden Federschenkel (7) jedes dieser Federelemente (5) jeweils in Umfangsrichtung außenseitig von einem Anschlag (12) der ersten Massenscheibe (2) und einem Anschlag (16,17) der zweiten Massenscheibe (3) flankiert werden.

2. Zweimassenschwungrad (1) nach Anspruch 1, **dadurch gekennzeichnet, dass** jedes dieser Federelemente (5) derart zwischen den Massenscheiben (2,3) eingelegt ist, dass seine Federschenkel (7) im Wesentlichen radial zu der Drehachse (4) ausgerichtet sind.

3. Zweimassenschwungrad (1) nach Anspruch 1 oder 2, **dadurch gekennzeichnet, dass** jedes dieser Federelemente (5) mit dem Federkörper (6) auf einen Haltevorsprung (8) der ersten Massenscheibe (2) aufgesteckt ist.

4. Zweimassenschwungrad (1) nach einem der Ansprüche 1 bis 3, **dadurch gekennzeichnet, dass** jedes dieser Federelemente (5) schmiermittelfrei zwischen den Massenscheiben (2,3) gelagert ist.

5. Zweimassenschwungrad (1) nach einem der Ansprüche 2 bis 4, **dadurch gekennzeichnet, dass** die erste Massenscheibe (2) mit mindestens zwei in Umfangsrichtung verlaufenden, gekrümmten Langlöchern (20) versehen ist, wobei mindestens zwei der Anschläge (16) oder mindestens zwei sonstige Haltebolzen der zweiten Massenscheibe (3) im Bereich jeweils eines der Langlöcher (20) durch die erste Massenscheibe (2) hindurchstehen, und wobei jeder dieser Anschläge (16) bzw. Haltebolzen das korrespondierende Langloch (20) zur Fixierung der Massenscheiben (2,3) aneinander außenseitig mit einem Haltekragen (21) hinterschneidet.

6. Zweimassenschwungrad (1) nach einem der Ansprüche 1 bis 5, **dadurch gekennzeichnet, dass** die Massenscheiben (2,3) in einem Gleitlager (25, 38, 39) mittelbar oder unmittelbar einander anliegen, das von den Federelementen (5) umgeben ist.

7. Zweimassenschwungrad (1) nach einem der Ansprüche 1 bis 6, **dadurch gekennzeichnet, dass** die beiden Massenscheiben (2,3) schmiermittelfrei aneinander gelagert ist.

8. Zweimassenschwungrad (1) nach einem der Ansprüche 1 bis 7, **dadurch gekennzeichnet, dass** hinsichtlich der Relativverdrehung der beiden Massenscheiben (2,3) ein Freiwinkel (a) ausgebildet ist, um den die Massenscheiben (2,3) rückstellungskraftfrei verdrehbar sind.

9. Zweimassenschwungrad (1) nach Anspruch 8, **gekennzeichnet durch** eine zwischen der ersten Massenscheibe (2) und der zweiten Massenscheibe (3) angeordnete und gegenüber beiden Massenscheiben (2,3) drehbar gelagerte Zwischenscheibe (30), wobei die Zwischenscheibe (30) einerseits mit den an der ersten Massenscheibe (2) fixierten Federelementen (5) gekoppelt ist, so dass eine Verdrehung der Zwischenscheibe (30) zu der ersten Massenscheibe (2) durch die Federelemente (5) angefedert ist, und wobei die Zwischenscheibe (30) andererseits mit Rotationspiel mit der zweiten Massenscheibe (3) gekoppelt ist, so dass die Zwischenscheibe (30) relativ zu der zweiten Massenscheibe (3) rückstellungskraftfrei um den Freiwinkel (α) verdrehbar ist.

10. Zweimassenschwungrad (1) nach Anspruch 9, **dadurch gekennzeichnet, dass** zur Kopplung der Zwischenscheibe (30) mit der zweiten Massenscheibe (3) an einer Innenseite (15) der zweiten Massenscheibe (3) mindestens ein Vorsprung (34) angebracht ist, wobei der oder jeder Vorsprung (34) mit Rotationspiel zwischen zwei Mitnehmer (45) der Zwischenscheibe (30) eingreift.

11. Zweimassenschwungrad (1) nach Anspruch 9 oder 10, **dadurch gekennzeichnet, dass** die Zwischenscheibe (30) über eine Anzahl von Anschlaghülsen (31,32) mit den Federelementen (5) gekoppelt ist, wobei die Anschlaghülsen (31,32) drehbar auf der Zwischenscheibe (30) gelagert sind.

12. Zweimassenschwungrad (1) nach Anspruch 11, **dadurch gekennzeichnet, dass** jede der Anschlaghülsen (31,32) in Form einer Walze ausgebildet ist, in deren Umfang mindestens eine Nut (41) zur Aufnahme eines Federschenkels (7) eines der Federelemente (5) eingebracht ist.

13. Zweimassenschwungrad (1) nach Anspruch 12, **dadurch gekennzeichnet, dass** jede der Anschlaghülsen (31,32) einen Kern (42) aus Kunststoff und einen diesen umfänglich umgebenden Außenring (43) aus Metall aufweist, und wobei der Kern (42) innerhalb der oder jeder Nut (41) über den Außenring (43) hervorsteht, so dass der in der Nut (41) einliegende Federschenkel (7) hier ausschließlich an dem Kern (42) anliegt.

## Claims

1. Dual mass flywheel (1), with a first mass disc (2) and a second mass disc (3), which mass discs are rotatable about an axis of rotation (4) relative to each other, and with a number of spring elements (5) which are arranged in between and by means of which the rotation of the mass discs (2, 3) relative to each other is cushioned, wherein each of said spring elements (5) has a coiled spring body (6) and two spring legs (7) protruding substantially tangentially therefrom, **characterized in that** the two spring legs (7) of each of said spring elements (5) are each flanked on the outer side in the circumferential direction by a stop (12) of the first mass disc (2) and a stop (16, 17) of the second mass disc (3) .

2. Dual mass flywheel (1) according to Claim 1, **characterized in that** each of said spring elements (5) is placed between the mass discs (2, 3) in such a manner that its spring legs (7) are oriented substantially radially with respect to the axis of rotation (4).

3. Dual mass flywheel (1) according to Claim 1 or 2, **characterized in that** each of said spring elements (5) is plugged by the spring body (6) onto a holding projection (8) of the first mass disc (2).

4. Dual mass flywheel (1) according to one of Claims 1 to 3, **characterized in that** each of said spring elements (5) is mounted without lubricant between the mass discs (2, 3).

5. Dual mass flywheel (1) according to one of Claims 2 to 4, **characterized in that** the first mass disc (2) is provided with at least two curved elongated holes (20) running in the circumferential direction, wherein at least two of the stops (16) or at least two other holding bolts of the second mass disc (3) protrude through the first mass disc (2) in the region of one of the elongated holes (20) each, and wherein each of said stops (16) or holding bolts undercuts the corresponding elongated hole (20) in order to fix the mass discs (2, 3) on each other on the outer side with a holding collar (21).

6. Dual mass flywheel (1) according to one of Claims 1 to 5, **characterized in that** the mass discs (2, 3) lie indirectly or directly against each other in a plain bearing (25, 38, 39) which is surrounded by the spring elements (5).

7. Dual mass flywheel (1) according to one of Claims 1 to 6, **characterized in that** the two mass discs (2, 3) are mounted on each other without lubricant.

8. Dual mass flywheel (1) according to one of Claims 1 to 7, **characterized in that** a clearance angle (α) is formed with respect to the relative rotation of the two mass discs (2, 3), about which clearance angle the mass discs (2, 3) are rotatable without a resetting force.

9. Dual mass flywheel (1) according to Claim 8, **characterized by** an intermediate disc (30) which is arranged between the first mass disc (2) and the second mass disc (3) and is mounted rotatably in relation to the two mass discs (2, 3), wherein the intermediate disc (30) is firstly coupled to the spring elements (5) fixed on the first mass disc (2) such that a rotation of the intermediate disc (30) with respect to the first mass disc (2) is cushioned by the spring elements (5), and wherein the intermediate disc (2) is secondly coupled with rotational play to the second mass disc (3), and therefore the intermediate disc (30) is rotatable about the clearance angle (α) relative to the second mass disc (3) without a resetting force.

10. Dual mass flywheel (1) according to Claim 9, **characterized in that** at least one projection (34) is attached to an inner side (15) of the second mass disc (3) in order to couple the intermediate disc (30) to the second mass disc (3), wherein the or each projection (34) engages with rotational play between two drivers (45) of the intermediate disc (30) .

11. Dual mass flywheel (1) according to Claim 9 or 10, **characterized in that** the intermediate disc (30) is coupled to the spring elements (5) via a number of stop sleeves (31, 32), wherein the stop sleeves (31, 32) are mounted rotatably on the intermediate disc (30) .

12. Dual mass flywheel (1) according to Claim 11, **characterized in that** each of the stop sleeves (31, 32) is in the form of a roller, in the circumference of which at least one groove (41) for receiving a spring leg (7) of one of the spring elements (5) is introduced.

13. Dual mass flywheel (1) according to Claim 12, **characterized in that** each of the stop sleeves (31, 32) has a core (42) made from plastic and an outer ring (43), which circumferentially surrounds the latter and is made of metal, and wherein the core (42) within the or each groove (41) protrudes over the outer ring (43) such that the spring leg (7) lying in the groove (41) lies exclusively against the core (42) here.

## Revendications

1. Volant d'inertie bi-masse (1), comprenant un premier disque de masse (2) et un deuxième disque de masse (3) pouvant tourner l'un par rapport à l'autre autour d'un axe de rotation (4), ainsi qu'un certain nombre d'éléments ressort (5) disposés entre ceux-ci au moyen desquels la rotation des disques de masse (2, 3) l'un par rapport à l'autre est contrainte par ressort, chacun de ces éléments ressort (5) présentant un corps de ressort (6) hélicoïdal et deux branches de ressort (7) saillant de celui-ci de façon sensiblement tangentielle, **caractérisé en ce que** les deux branches de ressort (7) de chacun de ces éléments ressort (5) sont chacune flanquées à l'extérieur dans la direction périphérique par une butée (12) du premier disque de masse (2) et par une butée (16, 17) du deuxième disque de masse (3).

2. Volant d'inertie bi-masse (1) selon la revendication 1, **caractérisé en ce que** chacun de ces éléments ressort (5) est inséré de telle sorte entre les disques de masse (2, 3) que ses branches de ressort (7) sont orientées de façon sensiblement radiale par rapport à l'axe de rotation (4).

3. Volant d'inertie bi-masse (1) selon la revendication 1 ou 2, **caractérisé en ce que** chacun de ces éléments ressort (5) est monté avec le corps de ressort (6) sur une saillie de retenue (8) du premier disque de masse (2).

4. Volant d'inertie bi-masse (1) selon l'une des revendications 1 à 3, **caractérisé en ce que** chacun de ces éléments ressort (5) est logé sans lubrifiant entre les disques de masse (2, 3).

5. Volant d'inertie bi-masse (1) selon l'une des revendications 2 à 4, **caractérisé en ce que** le premier disque de masse (2) est pourvu d'au moins deux trous oblongs incurvés (20) s'étendant dans la direction périphérique, au moins deux des butées (16) ou au moins deux autres boulons de retenue du deuxième disque de masse (3) saillant à travers le premier disque de masse (2) au niveau d'un des trous oblongs (20) respectif, et chacune de ces butées (16) ou chacun de ces boulons de retenue s'engageant par le côté extérieur avec une collerette de retenue (21) derrière le trou oblong correspondant (20) pour fixer entre eux les disques de masse (2, 3).

6. Volant d'inertie bi-masse (1) selon l'une des revendications 1 à 5, **caractérisé en ce que** les disques de masse (2, 3) sont appliqués directement ou indirectement l'un contre l'autre dans un palier lisse (25, 38, 39) qui est entouré par les éléments ressort (5).

7. Volant d'inertie bi-masse (1) selon l'une des revendications 1 à 6, **caractérisé en ce que** les deux disques de masse (2, 3) sont montés l'un sur l'autre sans lubrifiant.

8. Volant d'inertie bi-masse (1) selon l'une des revendications 1 à 7, **caractérisé en ce que** du point de vue de la rotation relative des deux disques de masse (2, 3), un angle de dépouille (α) est formé autour duquel les disques de masse (2, 3) peuvent tourner sans force de rappel.

9. Volant d'inertie bi-masse (1) selon la revendication 8, **caractérisé par** un disque intermédiaire (30) disposé entre le premier disque de masse (2) et le deuxième disque de masse (3) et monté rotatif par rapport aux deux disques de masse (2, 3), le disque intermédiaire (30) étant d'une part couplé aux éléments ressort (5) fixés au premier disque de masse (2), de sorte qu'une rotation du disque intermédiaire (30) par rapport au premier disque de masse (2) est contrainte par les éléments ressort (5), et le disque intermédiaire (30) étant d'autre part couplé avec un jeu de rotation au deuxième disque de masse (3), de sorte que le disque intermédiaire (30) peut tourner de l'angle de dépouille (α) par rapport au deuxième disque de masse (3) sans force de rappel.

10. Volant d'inertie bi-masse (1) selon la revendication 9, **caractérisé en ce qu'**au moins une saillie (34) est prévue sur un côté intérieur (15) du deuxième disque de masse (3) pour accoupler le disque intermédiaire (30) au deuxième disque de masse (3), la ou chaque saillie (34) étant en prise avec un jeu de rotation entre deux tocs d'entraînements (45) du disque intermédiaire (30).

11. Volant d'inertie bi-masse (1) selon la revendication 9 ou 10, **caractérisé en ce que** le disque intermédiaire (30) est couplé aux éléments ressort (5) par l'intermédiaire d'un certain nombre de manchons de butée (31, 32), les manchons de butée (31, 32) étant montés pivotants sur le disque intermédiaire (30).

12. Volant d'inertie bi-masse (1) selon la revendication 11, **caractérisé en ce que** chacun des manchons de butée (31, 32) est réalisé sous la forme d'un rouleau dans la circonférence duquel est réalisée au moins une rainure (41) pour recevoir une branche de ressort (7) d'un des éléments ressort (5).

13. Volant d'inertie bi-masse selon la revendication 12, **caractérisé en ce que** chacun des manchons de butée (31, 32) présente une âme (42) en matière plastique et une bague extérieure (43) en métal l'entourant par la circonférence, l'âme (42) saillant dans la ou chaque rainure (41) au-delà de la bague extérieure (43), de sorte que la branche de ressort (7) située dans la rainure (41) repose à cet endroit exclusivement contre l'âme (42).
